# EUROPÄISCHE PATENTSCHRIFT

(11) **EP 2 551 054 B1**
(45) Veröffentlichungstag und Bekanntmachung des Hinweises auf die Patenterteilung: **14.12.2016**
(21) Anmeldenummer: 12178488.8
(22) Anmeldetag: 30.07.2012
(51) Int. Cl.: B24B 19/16, B23K 11/30

(54) **Anordnung zum Schleifen von Elektroden**
Assembly for grinding electrodes
Agencement destiné au ponçage d'électrodes

(30) Priorität: 28.07.2011 DE 102011052247
(43) Veröffentlichungstag der Anmeldung: 30.01.2013
(73) Patentinhaber: Illinois Tool Works Inc., Glenview, IL 60025 (US)
(72) Erfinder: Tamm, Rolf, 88682 Salem (DE)
(74) Vertreter: Meissner Bolte Partnerschaft mbB

(56) Entgegenhaltungen:
- DE-A1- 10 066 073
- DE-A1- 10 210 069
- DE-A1-102006 052 905
- DE-B3- 10 243 210
- DE-B3-102009 044 860
- GB-A- 2 452 575

## Beschreibung

### Technisches Gebiet

Die Erfindung betrifft eine Vorrichtung zur Bearbeitung von Schweißelektroden mit einer von einem Antriebsmotor über eine Welle angetriebenen, dem Motor zugewandten Schleiffläche, welche in einem Gehäuse umläuft, wobei
(a) das Gehäuse wenigstens einen Durchbruch zur Führung der zu bearbeitenden Schweißelektrode in definierter Lage zu der Schleifscheibe aufweist,
(b) das Gehäuse an einem Motorflansch zur Lagerung der Welle lösbar befestigt ist, und
(c) die Schleifscheibe auf der dem Motor abgewandten Seite des Motorflansches angeordnet ist.

Die Durchbrüche können als Bohrungen ausgebildet sein. Schweißelektroden bestehen aus einem sehr harten und gegen hohe Temperaturen beständigen Material wie Wolfram. Es gibt Schweißelektroden von unterschiedlichem Querschnitt. Die Schweißelektroden laufen in einer Spitze oder in einer Schneide aus. Die Form der Schweißelektroden hängt von der jeweiligen Anwendung ab. Die Spitzen der Schweißelektroden verschleißen im Betrieb.

Schweißelektroden können ohne Anschliff oder mit einer vorgefertigten Spitze gekauft werden. Nach dem Gebrauch ist die Spitze oder der Anschliff verschlissen. Die Schweißelektroden werden dann nachgeschliffen oder verworfen. Das ist wegen des hochwertigen Materials sehr teuer.

### Stand der Technik

Es ist bekannt, Schweißelektroden an- oder nachzuschleifen. Das geschieht üblicherweise von Hand auf offenen Schleif- oder Trennscheiben. Dieses Verfahren ist ungenau und gefährlich. Weiterhin sind Vorrichtungen mit einer offenen Schleifscheibe bekannt, bei denen die Schweißelektroden durch eine Führungshülse unter einem bestimmten Winkel gegen die Schleifscheibe geführt werden. Auch solche Vorrichtungen sind aufwendig. Es ist insbesondere aufwendig, die Vorrichtung zur Anpassung an verschiedene Typen von Schweißelektroden oder an verschiedene Spitzen- oder Schneidenformen umzurüsten. Dabei ist insbesondere ein Austausch der Führungshülsen erforderlich.

Eine Vorrichtung, mit welcher Elektroden mit einer Vielzahl (z.B. 6) von unterschiedlichen Elektrodendurchmessern mit einer Vielzahl von unterschiedlichen Spitzenwinkeln (z.B. 4) und mit einer Vielzahl von Längen hergestellt werden können, ist ein wertvolles, kostensparendes Hilfsmittel.

Aus der DE 100 10 520 A1 ist eine Vorrichtung zur Bearbeitung von Schweißelektroden mit einer Schleifscheibe bekannt. Die Schleifscheibe läuft in einem ein Schleifscheibengehäuse um. Die Vorrichtung weist weiterhin einen Gehäuseaufsatz auf, welcher an dem Schleifscheibengehäuse befestigbar ist und wenigstens einen Durchbruch zur Führung einer zu bearbeitenden Schweißelektrode in definierter Lage zu der Schleifscheibe aufweist. Dabei fällt die Ebene der Schleifscheibe im wesentlichen mit der Trennebene zwischen dem Schleifscheibengehäuse und dem Aufsatz zusammen. Der Aufsatz kann eine Mehrzahl von gegeneinander versetzten, unterschiedlichen Durchbrüchen zur Aufnahme unterschiedlicher Typen von Schweißelektroden aufweisen. Der Aufsatz kann aber auch eine Mehrzahl von gegeneinander versetzten Durchbrüchen aufweisen, deren Achsen die Ebene der Schleifscheibe unter unterschiedlichen Winkeln schneiden. In dem Schleifscheibengehäuse kann ein sich über die Stirnfläche des Gehäuses erstreckender radialer Schlitz gebildet sein, durch welchen hindurch eine Schweißelektrode zum Durchtrennen an die Mantelfläche der Schleifscheibe anlegbar ist. Bei der offenbarten Vorrichtung ist die Schleifscheibe an einer Schleifscheibenaufnahme befestigt, die ihrerseits mit der Motorwelle des Antriebsmotors verbunden ist. Die gesamte Vorrichtung bildet eine tragbare Einheit.

Aus der DE 102 43 210 B3 ist eine Anordnung bekannt, bei der zwei parallele Schleifscheiben unterschiedlicher Körnung eingesetzt werden. Eine erste Schleifscheibe läuft in einem Hohlraum zwischen dem Motoraufsatz und einem ersten Gehäuseaufsatz um. Die zweite Schleifscheibe läuft in einem zweiten Hohlraum zwischen dem ersten Gehäuseaufsatz und dem zweiten Gehäuseaufsatz um. Die Gehäuseaufsätze sind mit Durchbrüchen zur Führung der Schweißelektroden versehen. Die bekannte Anordnung erlaubt den Einsatz unterschiedlicher Schleifscheiben ohne Umbau.

Die Anordnung verwendet neben einem Motor mit einem Motorgehäuse weitere Gehäuseteile: einen Motorflansch, der direkt am Motorgehäuse angeschraubt wird und wenigstens einen Gehäuseteil, in dem die Durchbrüche zur Führung der Elektroden vorgesehen sind. Die Durchbrüche erstrecken sich jeweils von der dem Motor abgewandten Seite im Gehäuseteil in Richtung auf die Schleifscheibe, die zwischen dem Motorflansch und dem Gehäuseteil umläuft. Je nach Anzahl der Schleifscheiben werden weitere Gehäuseteile aufgesetzt. Auch hier beginnen die Durchbrüche auf der dem Motor abgewanden Seite. Mit anderen Worten: Die Elektroden werden immer auf den Motor zu in die Durchbrüche eingeführt. Die Anordnung ist je nach Anzahl der Gehäuseteile vergleichsweise lang und benötigt eine lange Antriebswelle. Zur Befestigung der Gehäuseteile sind mehrere weitere Befestigungsbauteile, wie Schrauben, Muttern, Stifte etc. erforderlich.

DE 10 2009 044 860 B3 offenbart eine Elektrodenschleifvorrichtung, bei der zwei Gehäuseteile auf das Motorgehäuse aufgesetzt werden, zwischen denen zwei Schleifscheiben rotieren. Nachteilig bei dieser Anordnung ist es, dass die große Baulänge bei hohen Drehzahlen zu unerwünschten Vibrationen führt.

DE 10 2006 052 905 A1 offenbart eine Elektrodenschleifvorrichtung, bei welcher der Durchbruch in einem Gehäuseteil vorgesehen ist, der direkt am Motorgehäuse befestigt ist und die Schleifscheibe auf der dem Motor abgewandten Seite des Gehäuseteils angeordnet ist, wobei der Durchbruch vom Umfang des Gehäuseteils zur Schleifscheibe hin verläuft. Das erste, mit Durchbrüchen versehene Gehäuseteil ist also gleichzeitig der Motorflansch und wird direkt am Motorengehäuse angeordnet. Die Elektroden werden vom Motor weg in die Durchbrüche eingeführt. Die Schleifscheibe befindet sich auf der dem Motor abgewandten Seite. Bei dieser Anordnung verkürzt sich die Anordnung um die Länge eines Bauteils. Die Anordnung benötigt weniger Gehäuseteile und Befestigungskomponenten und die Welle können kürzer ausgestaltet werden. Dadurch wird die Gefahr, dass die Welle schlingert verringert.

Nachteilig bei der Verwendung des Motorflansches als Gehäuseteil für die Bohrungen ist es, dass er schwer ausgewechselt werden kann. In dem Bauteil ist das Lager für die

Motorwelle angeordnet. Wenn eine Bohrung defekt ist und der Motorflansch ausgewechselt werden soll, muss auch das Lager erneuert werden. Dazu muss der Motor zerlegt und neu gewuchtet werden. Das ist aufwändig. Für den Austausch des Motorflansches wird das Gerät üblicherweise zum Hersteller geschickt. Das Gerät steht dann in der Zwischenzeit dem Benutzer nicht mehr zur Verfügung.

### Offenbarung der Erfindung

Es ist Aufgabe der Erfindung, eine Vorrichtung der eingangs genannten Art zu schaffen, welche ein Auswechseln oder Warten der motorseitigen Durchbrüche erleichtert.

Erfindungsgemäß wird die Aufgabe dadurch gelöst, dass der Motorflansch von einer Hülse gebildet ist, auf welche das Gehäuse so weit aufsteckbar ist, dass wenigstens ein Durchbruch vom Umfang des Gehäuses zu der dem Motor zugewandten Schleiffläche hin verläuft. Die Durchbrüche können als Bohrung verwirklicht sein.

Die Anordnung hat mehrere Vorteile: Die Baulänge ist gering, da das Gehäuse über die Schleifscheibe hinaus auf die Hülse aufgesteckt wird. Bohrungen können dann im gleichen Gehäuse sowohl von der Motorseite, als auch von der gegenüberliegenden, dem Motor abgewandten Seite in Richtung auf die Schleifscheibe geführt sein. Die Bohrungen sind alle in einem gemeinsamen Gehäuse vorgesehen, das leicht von der Hülse abgezogen und ersetzt oder gewartet werden kann. Die Hülse weist, anders als bei der bekannten Anordnung, bei welcher die Motorseite der Schleifscheibe eingesetzt wird, keine Bohrungen mehr auf. Wenn also ein Durchbruch defekt ist, wird das Gehäuse mit den Bohrungen gelöst und ersetzt oder gewartet. Die Hülse bleibt am Motorgehäuse befestigt, so dass die Lagerung der Welle nicht beeinflusst wird.

Die Hülse kann in einer Ausgestaltung der Erfindung einen Flansch aufweisen, mit dem sie an das Motorgehäuse angeflanscht wird. Im übrigen kann die Hülse zylindrisch ausgebildet sein. Der zylindrische Teil verläuft dann koaxial zur Welle. Vorzugsweise ist das dem Motor abgewandte Ende des zylindrischen Teils konisch ausgebildet.

Im Bereich des Flansches sind auf der dem Motor abgewandten Seite der Hülse vorzugsweise Gewindebohrungen für Schrauben zur Befestigung des Gehäuses und/oder einer Schutzhaube vorgesehen. Statt einer Gewindebohrung ist auch eine Aufnahme für eine Mutter sehr gut geeignet. Die Mutter wird unverdrehbar in der Aufnahme gelagert. Die Schraube wird dann mit der Mutter zum Befestigen des Gehäuses und/oder einer Schutzhaube verschraubt. Die Unverdrehbarkeit ermöglicht es, dass das Gehäuse und/oder die Schutzhaube mit nur einer einzigen Schraube befestigt werden können. Durch geeignete Positionierung der Mutter in der Aufnahme kann eine gewünschte laterale Verschiebung des Gehäuses gegenüber der Hülse verwirklicht werden.

Es kann aber auch ein weiterer Zapfen entlang des Umfangs auf der Oberseite der Hülse vorgesehen sein, welcher in eine Bohrung auf der Unterseite des Gehäuses und/oder der Schutzhülle eingreift. Auch dadurch wird sichergestellt, dass die Verbindung unverdrehbar ist.

Vorzugsweise läuft in dem Gehäuse eine weitere, dem Motor abgewandte Schleiffläche um, und das Gehäuse umfasst wenigstens einen weiteren Durchbruch, der vom Umfang des Gehäuses zu der dem Motor abgewandten Schleiffläche hin verläuft. Dann können zwei Schleifflächen verwendet werden. Dies ist insbesondere dann sinnvoll, wenn eine unterschiedliche Körnung verwendet werden soll.

Die Schleifflächen können jeweils gegenüberliegende Seiten einer Schleifscheibe bilden oder auf verschiedenen Schleifscheiben vorgesehen sind, welche um die gleiche Achse umlaufen und mit den Schleifflächen in entgegengesetzter Richtung ausgerichtet sind.

Vorzugsweise ist das Gehäuse in verschiedenen lateralen Positionen relativ zur Rotationsachse der Welle an der Hülse befestigbar. Dann werden unterschiedliche Bereiche auf der Schleiffläche beansprucht.

In einer Ausgestaltung der Erfindung ist eine Schutzhaube mit einer Absaugeinrichtung auf das Gehäuse aufsetzbar. Dabei ist es besonders vorteilhaft, wenn die Schutzhaube einer lateralen Positionierung des Gehäuses folgt. Dabei ist die Schutzhaube vorzugsweise mit dem Gehäuse verbunden. Bei einer lateralen Verschiebung des Gehäuses wird die Schutzhülle mitverschoben, da diese am Gehäuse und nicht am Motorflansch befestigt ist.

Bei einer weiteren Ausgestaltung der Erfindung ist ein Winkel zur Befestigung der Vorrichtung an einem Tisch oder an einem Schraubstockhalter vorgesehen. Im übrigen ist die Vorrichtung als Handgerät ausgebildet.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine Explosionsdarstellung einer Vorrichtung zur Bearbeitung von Schweißelektroden mit mehreren Schleifflächen und einem Gehäuseteil mit mehreren Durchbrüchen zur Führung von Elektroden, welches auf einen als Hülse ausgebildeten Motorflansch aufsetzbar ist.
- Fig.2: ist eine perspektivische Darstellung des als Hülse ausgebildeten Motorflansches im Detail.
- Fig.3: ist eine perspektivische Darstellung des Gehäuseteils mit mehreren Durchbrüchen zur Führung von Elektroden im Detail.
- Fig.4: ist eine perspektivische Darstellung des Gehäuseflansches aus Figur 3 in einer alternativen Ansicht.

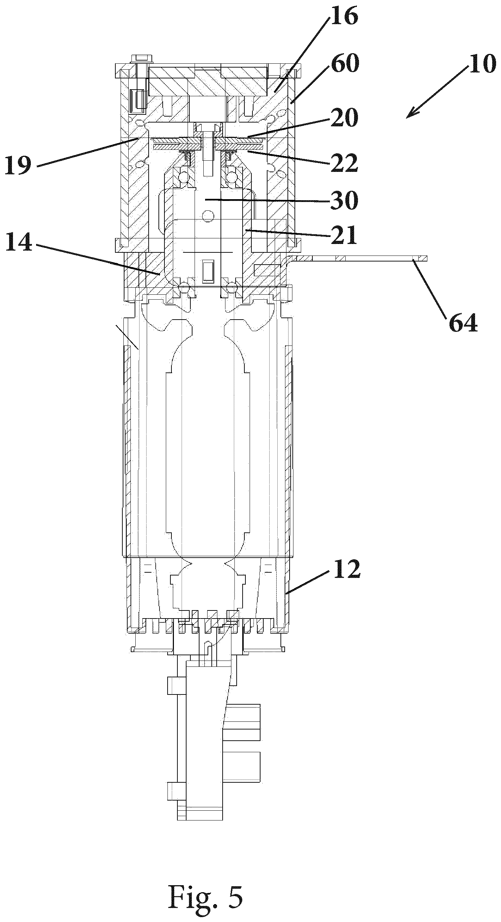

- Fig.5: ist ein Querschnitt durch die zusammengesetzte Anordnung aus Figur 1.

### Beschreibung des Ausführungsbeispiels

In den Figuren bezeichnet 10 allgemein eine Vorrichtung zum Schleifen von Schweißelektroden aus Wolfram. Die Vorrichtung 10 umfasst einen Motor mit einem Motorgehäuse 12, einen an dem Motorgehäuse 12 angeschraubten Motorflansch 14 und ein auf dem Motorflansch 14 aufgesetztes zylindrisches Gehäuseteil 16. Das Gehäuseteil 16 wird auf unten zu beschreibende Weise mit dem Motor und dem Motorflansch verbunden.

In einer Ebene 19 innerhalb des Gehäuseteils 16 läuft eine Schleifscheibenanordnung 18 mit zwei Schleifscheiben 20 und 22 unterschiedlicher Körnung um. Die Schleifscheibenanordnung 18 umfasst eine grobkörnige Schleifscheibe 20 und eine ansonsten gleichermaßen aufgebaute, feinkörnige Schleifscheibe 22.

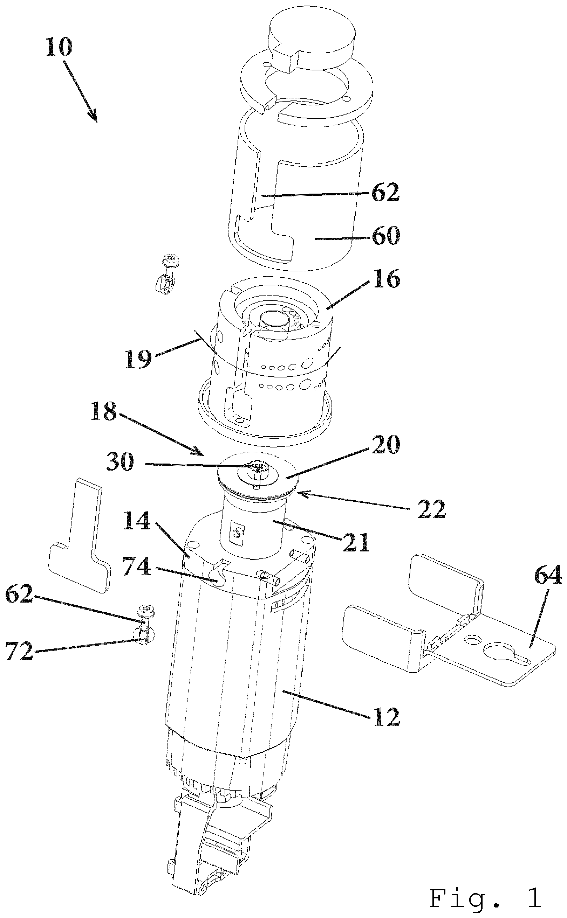

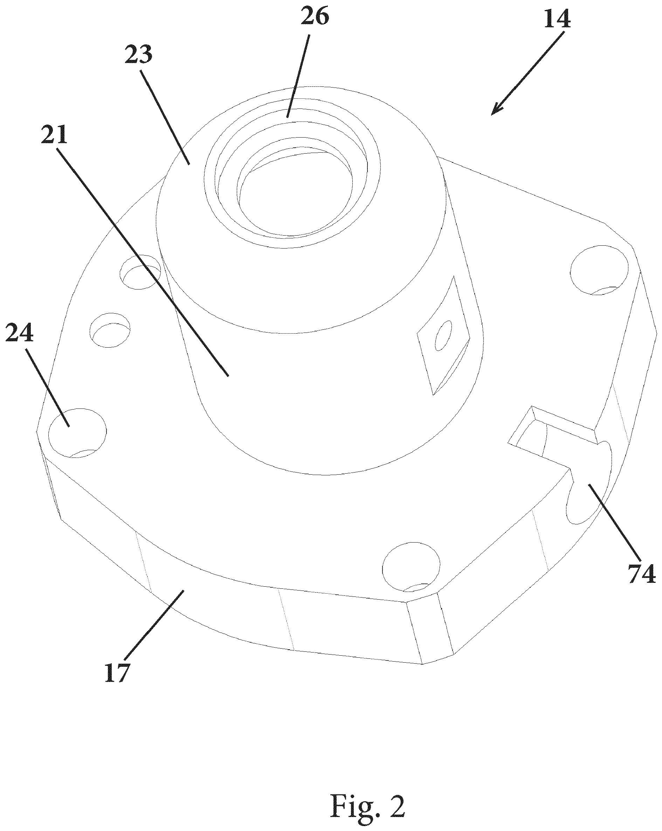

In Figur 2 ist der Motorflansch 14 gesondert dargestellt. Der Flansch ist mit vier Bohrungen 24 versehen. Über diese Bohrungen 24 wird der Flansch am Motorgehäuse 12 auf die in Fig.1 dargestellte Weise verschraubt.

An dem dem Motor abgewandten Ende des Motorflansches 14 ist eine scheibenförmige Vertiefung 26 vorgesehen. Diese Vertiefung 26 dient der Aufnahme der Schleifscheibenanordnung 18. Eine Welle 30, mit welcher die Schleifscheibenanordnung 18 mit dem Motor verschraubt wird, ist gleichzeitig die Motorwelle. Die Welle 30 ist fest mit der Schleifscheibenanordnung 18 verbunden.

Der Motorflansch weist im Bereich 17 der dem Motorgehäuse 12 zugewandten Seite einen größeren Querschnitt auf, welcher dem Querschnitt des Motorgehäuses 12 entspricht. Auf der dem Motorgehäuse 12 abgewandten Seite des Motorflansches bildet der Motorflansch eine zylindrische Hülse 21. Die zylindrische Hülse 21 erstreckt sich koaxial um die Welle 30. Das Ende 23 der Hülse 21 läuft konisch zu.

Wenn die Schleifscheibenanordnung 18 mit der Welle 30 eingesetzt ist, wird das im wesentlichen zylindrische Gehäuseteil 16 koaxial auf den Motorflansch 14 aufgesetzt. Dabei umschließt das Gehäuseteil 16 die Hülse 21 vollständig. Die Schleifscheibenanordnung 18 läuft im Bereich der Ebene 19 innerhalb des Gehäuseteils 16 um.

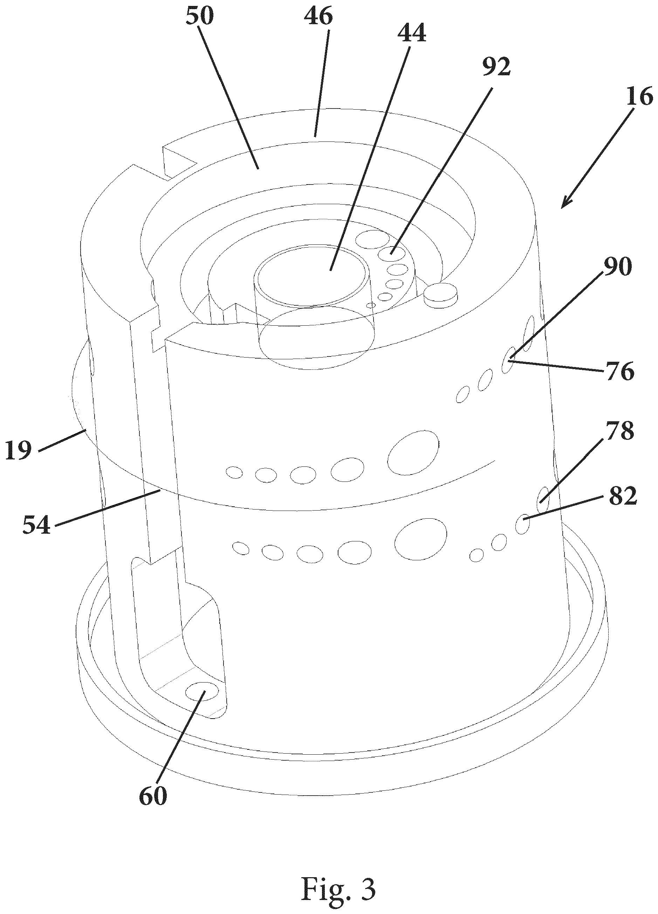

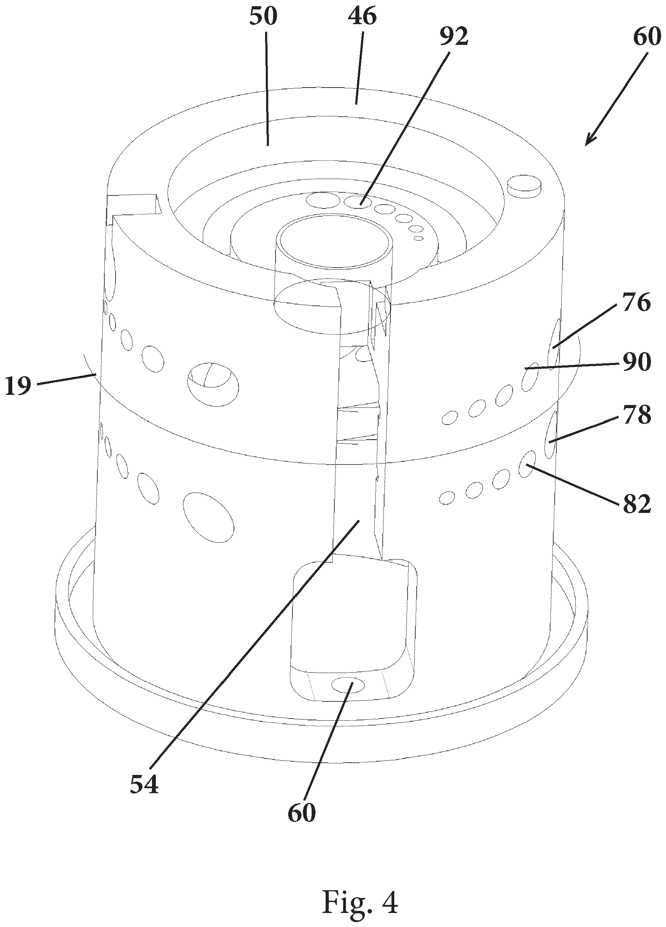

Das Gehäuseteil 16 ist in Figur 3 und Figur 4 im Detail dargestellt. Das Gehäuseteil 16 ist mit einer Mittenbohrung 44 versehen. Die Mittenbohrung 44 fluchtet mit den Bohrungen der Schleifscheibenanordung 18 und der Rotationsachse der Welle 30. Um die Bohrung herum ist an der Planseite 46 eine Vertiefung 50 vorgesehen. Das Gehäuse 16 weist ferner einen Längsschlitz 54 in radialer Richtung auf, welcher sich über die gesamte Dicke des Gehäuses erstreckt. Der Schlitz 54 ist breit genug, dass die Elektroden dort eingeführt werden können. Bei rotierender Schleifscheibenanordnung 18 kann die Elektrode an der Schleifscheibenanordnung 18 gekürzt werden, indem das verbrauchte Elektrodenende oder die neu angeschliffene Elektrodenseite abgeschnitten wird.

In dem Gehäuse 16 ist eine Bohrung 60 vorgesehen. Durch die Bohrung 60 greift eine Schraube 62 (Fig.1), mit welcher das Gehäuse 16 und der Motorflansch 14 gemeinsam miteinander verschraubt werden. Die Schraube 62 wird dabei in eine Mutter 72 eingeschraubt, die in einer Ausnehmung 74 im Motorflansch 14 vorgesehen ist. Durch diese Anordnung ist das Gehäuse 16 unverrutschbar mit dem Motorflansch 14 mit nur einer Schraube 62 verschraubt. Dies erlaubt ein besonders einfaches und schnelles Auseinander- und Zusammenbauen, wenn eine Schleifscheibe ausgewechselt werden soll. Es kann bei der vorliegenden Anordnung eine Welle 30 mit besonders kurzem Hals 28 verwendet werden.

Das Gehäuse 16 und der Motorflansch 14 weisen Gruppen 76 und 78 von Bohrungen auf. Die Bohrungen erstrecken sich jeweils vom Umfang des Gehäuses in Richtung auf die dem Gehäuse bzw. Motorflansch nächstliegende Schleifscheibe. Jede Gruppe umfasst eine Vielzahl Bohrungen 82 (im folgenden auch als Durchbrüche bezeichnet) unterschiedlichen Durchmessers, der jeweils oberhalb der Bohrung durch eine Gravur angegeben ist. Der Winkel, unter dem eine in eine Bohrung 82 beziehungsweise einen Durchbruch eingeführte Elektrode auf die Schleifscheibe trifft, ist dabei innerhalb einer Gruppe von Bohrungen gleich. Die Bohrung 82 hat beispielsweise einen Durchmesser von 1,6 mm und einen Anschleifwinkel von 22,5 Grad. Er ist durch eine Gravur oberhalb der ersten Gravur für die jeweilige Gruppe angegeben. Es sind entsprechend in der gezeigten Ausführungsform verschiedene Winkel bei einem Anschliff möglich. Dabei können Elektroden mit unterschiedlichen Durchmessern verwendet werden. Die Elektrode wird durch die Bohrung 82 so gut geführt, dass reproduzierbare Ergebnisse ohne Aufwand oder Gefahr erhalten werden.

Mehr Anschleifwinkel, weitere Elektrodendurchmesser oder die Verwendung einer Abriebfläche mit unterschiedlicher Körnung werden berücksichtigt, indem Bohrungen oberhalb und unterhalb der Ebene 19 vorgesehen sind. Eine Elektrode, kann zum Beispiel zunächst grob vorgeschliffen werden, indem sie durch eine Bohrung 82 im Gehäuse 16 geführt wird. Dabei wird für die Schleifscheibe 22, deren Abriebfläche nach unten zeigt, eine grobe Körnung vorgesehen. Zum Feinschliff wird dann eine Bohrung 90 oberhalb der Ebene 19 verwendet. Die zugehörige Schleifscheibe 20, deren Abriebfläche nach oben zeigt, weist eine feine Körnung auf.

Das Gehäuse 16 weist weiterhin eine Gruppe 92 von Bohrungen auf, welche sich senkrecht von der Oberseite zur Unterseite des Gehäuses 16 erstrecken. Auch die Bohrungen dieser Gruppe haben unterschiedliche Durchmesser, welche den Durchmessern der übrigen Gruppen entsprechen. Die Bohrungen der Gruppe 92 ermöglichen das senkrechte Schleifen der Elektrodenspitzen.

Die gesamte Anordnung ist auf ein Handgerät aufgeschraubt. Dabei sitzt die Schleifscheibenanordnung unmittelbar vor dem Kugellager der Motorwelle 30. Dies verhindert ein Schlingern bei hohen Drehzahlen.

Um das Gehäuseteil 16 herum ist eine Kappe 60 drehbar angeordnet. Die Kappe 60 weist einen Schlitz 62 auf, welcher im Bereich der gewünschten Bohrung 82 angeordnet werden kann. Die Kappe 60 ist mit einer Absaugeinrichtung verbunden. Auf diese Weise kann kein Schleifstaub aus der Anordnung austreten.

Die Anordnung ist kurz, leich handhabbar und benötigt wenig Bauteile. Sie ist daher kostengünstiger bei Transport, Lagerung und Herstellung.

Wenn eine Bohrung defekt ist, wird die Schraube 62 gelöst und das Gehäuseteil 16 abgenommen und ausgewechselt oder gewartet. Das Kugellager und die Welle 30 innerhalb des Motorflansches 14 bleiben davon unberührt.

Das Gehäuseteil 16 weist Bohrungen in zwei Ebenen auf, welche sich oberhalb und unterhalb der Ebene 19 mit der Schleifscheibenanordnung erstrecken. Anders als bei bekannten Anordnungen läuft die Schleifscheibenanordnung 18 also nicht im Verbindungsbereich zwischen zwei Gehäuseteilen um, sondern innerhalb eines Gehäuseteils.

Statt zwei gesonderter Schleifscheiben kann auch nur eine Schleifscheibe mit zwei Schleifflächen verwendet werden. Für den Gebrauch mit nur einer Schleifscheibe hat das Gehäuseteil wenigstens 1 Bohrung jeweils in der Motor abgewandten und Motor zugewandten Seite. Dadurch kann die eine Schleifscheibe wie bei dem oben beschriebenen Ausführungsbeispiel gleichzeitig von oben und unten benutzt werden. Es handelt sich dabei um eine zweite Variante wo die Bohrungen der beiden Ebenen näher beieinander liegen, sodass die Schleifscheibenebene einer Schleifscheibe von oben und unten getroffen werden kann.

Es versteht sich, dass die Erfindung auch bei Anordnungen mit nur einer Schleiffläche verwirklicht werden kann. Dann läuft die Schleifscheibe vorzugsweise im Endbereich des Gehäueteils 16 um, um eine kurze Baulänge zu erreichen. Die Bohrungen sind dabei auf der dem Motor zugewandten Seite der Schleifscheibe vorgesehen und die Schleiffläche ist dem Motor zugewandt.

Die Anordnung ist als Handgerät ausgebildet. Mit einem Halter 64 kann sie jedoch auch an einer Werkbank oder einem Schraubstock befestigt werden.

## Patentansprüche

1. Vorrichtung (10) zur Bearbeitung von Schweißelektroden mit einer von einem Antriebsmotor über eine Welle (30) angetriebenen, dem Motor (12) zugewandten Schleiffläche (22), welche in einem Gehäuse (16) umläuft, wobei
(a) das Gehäuse (16) wenigstens einen Durchbruch (82) zur Führung der zu bearbeitenden Schweißelektrode in definierter Lage zu der Schleifscheibe (22) aufweist,
(b) das Gehäuse (16) an einem Motorflansch (14) zur Lagerung der Welle (30) lösbar befestigt ist, und
(c) die Schleifscheibe (22) auf der dem Motor abgewandten Seite des Motorflansches (14) angeordnet ist,
(d) der Motorflansch (14) von einer Hülse (21) gebildet ist, auf welche das Gehäuse (16) so weit aufsteckbar ist, dass wenigstens ein Durchbruch (82) vom Umfang des Gehäuses (16) zu der dem Motor zugewandten Schleiffläche (22) hin verläuft.

2. Vorrichtung (10) nach Anspruch 1, **dadurch gekennzeichnet, dass** in dem Gehäuse (16) eine weitere, dem Motor abgewandte Schleiffläche (20) umläuft, und das Gehäuse (16) wenigstens einen weiteren Durchbruch (90) umfasst, der vom Umfang des Gehäuses zu der dem Motor abgewandten Schleiffläche (20) hin verläuft.

3. Vorrichtung nach Anspruch 2, **dadurch gekennzeichnet, dass** die Schleifflächen jeweils gegenüberliegende Seiten einer Schleifscheibe bilden oder auf verschiedenen Schleifscheiben (20, 22) vorgesehen sind, welche um die gleiche Achse umlaufen und mit den Schleifflächen in entgegengesetzter Richtung ausgerichtet sind.

4. Vorrichtung nach einem der vorgehenden Ansprüche, **dadurch gekennzeichnet, dass** das Gehäuse (16) in verschiedenen lateralen Positionen relativ zur Rotationsachse der Welle (30) an der Hülse (21) befestigbar ist.

5. Vorrichtung nach einem der vorgehenden Ansprüche, **dadurch gekennzeichnet, dass** eine Schutzhaube (60) mit einer Absaugeinrichtung auf das Gehäuse (16) aufsetzbar ist.

6. Vorrichtung nach Anspruch 4 und 5, **dadurch gekennzeichnet, dass** die Schutzhaube (60) einer lateralen Positionierung des Gehäuses (16) folgt.

7. Vorrichtung nach einem der vorgehenden Ansprüche, **gekennzeichnet, durch** einen Winkel (64) zur Befestigung der Vorrichtung an einem Tisch oder an einem Schraubstockhalter.

## Claims

1. Apparatus (10) for machining welding electrodes, having a grinding face (22) which is driven by a drive motor via a shaft (30), faces the motor (12) and revolves in a housing (16), wherein
(a) the housing (16) has at least one aperture (82) for guiding the welding electrode to be machined into a defined position with respect to the grinding wheel (22),
(b) the housing (16) is fastened releasably to a motor flange (14) for supporting the shaft (30), and
(c) the grinding wheel (22) is arranged on that side of the motor flange (14) that faces away from the motor,
**characterized in that**
(d) the motor flange (14) is formed by a sleeve (21) onto which the housing (16) is able to be plugged to such an extent that at least one aperture (82) extends from the circumference of the housing (16) to the grinding face (22) facing the motor.

2. Apparatus (10) according to Claim 1, **characterized in that** a further grinding face (20) facing away from the motor revolves in the housing (16), and the housing (16) comprises at least one further aperture (90) which extends from the circumference of the housing to the grinding face (20) facing away from the motor.

3. Apparatus according to Claim 2, **characterized in that** the grinding faces each form opposite sides of a grinding wheel or are provided on different grinding wheels (20, 22) which revolve about the same axis and are oriented with their grinding faces in opposite directions.

4. Apparatus according to one of the preceding claims, **characterized in that** the housing (16) is able to be fastened to the sleeve (21) in different lateral positions relative to the rotation axis of the shaft (30).

5. Apparatus according to one of the preceding claims, **characterized in that** a protective hood (60) having a suction-extraction device is able to be placed on the housing (16).

6. Apparatus according to Claims 4 and 5, **characterized in that** the protective hood (60) follows a lateral position of the housing (16).

7. Apparatus according to one of the preceding claims, **characterized by** a bracket (64) for fastening the apparatus to a table or a vice holder.

## Revendications

1. Dispositif (10) pour l'usinage d'électrodes de soudage avec une face de ponçage (22) entraînée par un moteur d'entraînement par l'intermédiaire d'un arbre (30) et tournée vers le moteur (12), laquelle tourne dans un boîtier (16), dans lequel
(a) le boîtier (16) présente au moins un passage (82) pour le guidage de l'électrode de soudage à usiner dans une position définie par rapport au disque de ponçage (22),
(b) le boîtier (16) est fixé de façon démontable à un flasque de moteur (14) pour l'appui de l'arbre (30), et
(c) le disque de ponçage (22) est disposé sur le côté du flasque de moteur (14) situé à l'opposé du moteur,
**caractérisé en ce que**
(d) le flasque de moteur (14) est formé par une douille (21), sur laquelle le boîtier (16) peut être engagé au point qu'au moins un passage (82) s'étende depuis le pourtour du boîtier (16) jusqu'à la face de ponçage (22) tournée vers le moteur.

2. Dispositif (10) selon la revendication 1, **caractérisé en ce qu'**une autre face de ponçage (20) située à l'opposé du moteur tourne dans le boîtier (16), et le boîtier (16) comporte au moins un autre passage (90), qui s'étend depuis le pourtour du boîtier jusqu'à la face de ponçage (20) située à l'opposé du moteur.

3. Dispositif selon la revendication 2, **caractérisé en ce que** les faces de ponçage forment respectivement des côtés opposés d'un disque de ponçage ou sont prévues sur des disques de ponçage différents (20, 22), qui tournent autour du même axe et sont orientées avec les faces de ponçage en direction opposée.

4. Dispositif selon l'une quelconque des revendications précédentes, **caractérisé en ce que** le boîtier (16) peut être fixé sur la douille (21) dans différentes positions latérales par rapport à l'axe de rotation de l'arbre (30).

5. Dispositif selon l'une quelconque des revendications précédentes, **caractérisé en ce qu'**une hotte de protection (60) avec un système d'aspiration peut être posée sur le boîtier (16).

6. Dispositif selon la revendication 4 ou 5, **caractérisé en ce que** la hotte de protection (60) suit un positionnement latéral du boîtier (16).

7. Dispositif selon l'une quelconque des revendications précédentes, **caractérisé par** une cornière (64) destinée à la fixation du dispositif à une table ou à un porte-étau.
